# EUROPEAN PATENT APPLICATION

(11) **EP 3 492 525 A1**
(43) Date of publication of application: **05.06.2019**
(21) Application number: 17834338.0
(22) Date of filing: 25.07.2017
(51) Int. Cl.: C08L 101/02, C08J 5/04, C08K 3/00, C08K 7/02

(54) **COMPOSITE MOLDED ARTICLE, INTERMEDIATE FOR COMPOSITE MOLDED ARTICLE, METHOD OF MANUFACTURING COMPOSITE MOLDED ARTICLE, AND INTERIOR MATERIAL FOR TRANSPORT DEVICE**

(30) Priority: 28.07.2016 JP 2016149038; 28.07.2016 JP 2016149039
(71) Applicant: Sumitomo Bakelite Co., Ltd., Shinagawa-ku Tokyo 140-0002 (JP)
(72) Inventor: KITAZOE, Katsuma, Tokyo 140-0002 (JP); HASHIMOTO, Kouichi, Tokyo 140-0002 (JP); KONNO, Hiroki, Tokyo 140-0002 (JP)
(74) Representative: Ter Meer Steinmeister & Partner
(86) International application number: PCT/JP2017/026908
(87) International publication number: WO 2018/021336

(57) **Abstract**

A composite molded article 1 includes a resin 2, fibers 3 provided to be dispersed in the resin 2, and holes 4 formed between the resin 2 and the fibers 3. The composite molded article 1 has a specific strength of 30 to 400 Mpa (g/cm³)⁻¹. As a result of this configuration, it is possible to provide a composite molded article that achieves both a reduction in weight and high mechanical properties.

## Description

### Technical Field

The present invention relates to a composite molded article, an intermediate for a composite molded article, a method of manufacturing a composite molded article, and an interior material for transportation equipment.

### Background Art

Structural materials used for interior materials or the like of aircrafts and automobiles are required to further reduce weight. By reducing the weight, it is possible to suppress the fuel consumption of aircrafts and automobiles.

As such a structural material, a fiber reinforced resin, which is obtained by press-molding a mixture (papermaking sheet), obtained by mixing reinforced fibers such as glass fibers and a resin such as polypropylene or the like, while heating, is used (for example, refer to PTL 1). In a fiber reinforced resin described in PTL 1, fibers are entangled with each other to face in all three-dimensional directions. Thus, the fiber reinforced resin is reinforced.

PTL 1 discloses that a papermaking sheet is expanded by using spring back of the reinforced fibers during molding of the fiber reinforced resin to lower the density of the fiber reinforced resin. Thus, it is possible to obtain a fiber reinforced resin with sound insulation properties and heat insulation.

### Citation List

### Patent Literature

[PTL 1] JP-A-2016-016541

### Summary of Invention

### Technical Problem

In recent years, a demand for further reducing the weight of structural materials has become stronger. Therefore, it is required to further lower the density of fiber reinforced resins.

However, in a case where the density of a fiber reinforced resin is lowered, the mechanical strength of the fiber reinforced resin is lowered. As a result, the fiber reinforced resin may not function as a structural material.

An object of the present invention is to provide a composite molded article and an interior material for transportation equipment that achieve both weight reduction and high mechanical properties, an intermediate for a composite molded article that can be easily manufactured into a composite molded article having a wide range of porosity, and a method of manufacturing a composite molded article capable of efficiently manufacturing the composite molded article.

### Solution to Problem

Such an object can be achieved by the following present inventions (1) to (12).
(1) A composite molded article including: a resin; fibers provided to be dispersed in the resin; and holes formed between the resin and the fibers, in which a specific strength is 30 to 400 MPa·(g/cm³)⁻¹.
(2) The composite molded article according to (1), in which a porosity is 5% to 90%.
(3) The composite molded article according to (1) or (2), in which the fibers have an average length of 1 mm or more.
(4) The composite molded article according to any one of (1) to (3), in which the fibers are inorganic fibers.
(5) The composite molded article according to any one of (1) to (4), in which the resin includes a thermoplastic resin.
(6) The composite molded article according to any one of (1) to (5), in which a 2-minute total heat release is 50 [kW·min/m²] or less, and a peak heat release rate is 50 [kW/m²] or less.
(7) The composite molded article according to any one of (1) to (6), in which the resin has a melting point of 200°C to 400°C.
(8) An intermediate for a composite molded article, including: a resin; fibers having a melting point higher than that of the resin; and holes,
   in which a porosity is 25% to 99%, and
   the intermediate has moldability when heated.
(9) The intermediate for a composite molded article according to (8), in which the resin has a melting point of 200°C to 400°C.
(10) The intermediate for a composite molded article according to (8) or (9), in which the resin is fibrous.
(11) The intermediate for a composite molded article according to any one of (8) to (10), in which the fibers are inorganic fibers.
(12) A method of manufacturing a composite molded article, including:
   a step of performing papermaking using a dispersion liquid including a resin having a melting point of 200°C to 400°C, and fibers having a melting point higher than that of the resin to obtain an intermediate; and
   a step of press-molding the intermediate while heating, and melting at least a part of the resin to obtain a composite molded article.
(13) The method of manufacturing a composite molded article according to (12), in which the resin is fibrous.
(14) An interior material for transportation equipment including: the composite molded article according to any one of (1) to (7) .

### Advantageous Effects of Invention

According to the present invention, it is possible to obtain a composite molded article and an interior material for transportation equipment that achieve both weight reduction and high mechanical properties.

According to the present invention, it is possible to obtain an intermediate for composite molded article that can be easily manufactured into a composite molded article having a wide range of porosity.

According to the present invention, it is possible to efficiently manufacture a composite molded article that achieves both weight reduction and high mechanical properties.

### Brief Description of Drawings

FIG. 1 is a perspective view schematically showing an embodiment of a composite molded article according to the present invention.
FIG. 2 is a view illustrating an embodiment of a method of manufacturing a composite molded article according to the present invention.
FIG. 3 is a view illustrating the embodiment of the method of manufacturing a composite molded article according to the present invention.
FIG. 4 is a view illustrating the embodiment of the method of manufacturing a composite molded article according to the present invention.
FIG. 5 is a view illustrating the embodiment of the method of manufacturing a composite molded article according to the present invention.
FIG. 6 is a view illustrating the embodiment of the method of manufacturing a composite molded article according to the present invention.
FIG. 7 is a perspective view schematically showing an embodiment of an interior material for transportation equipment according to the present invention.
FIG. 8 is a graph showing a relationship between a set molding pressure and the density of a composite molded article obtained by press molding at the molding pressure.

### Description of Embodiments

Hereinafter, a composite molded article, an intermediate for a composite molded article, a method of manufacturing a composite molded article, and an interior material for transportation equipment of the present invention will be described in detail based on suitable embodiments shown in the attached drawings.

### <Composite Molded Article>

First, an embodiment of a composite molded article of the present invention will be described.

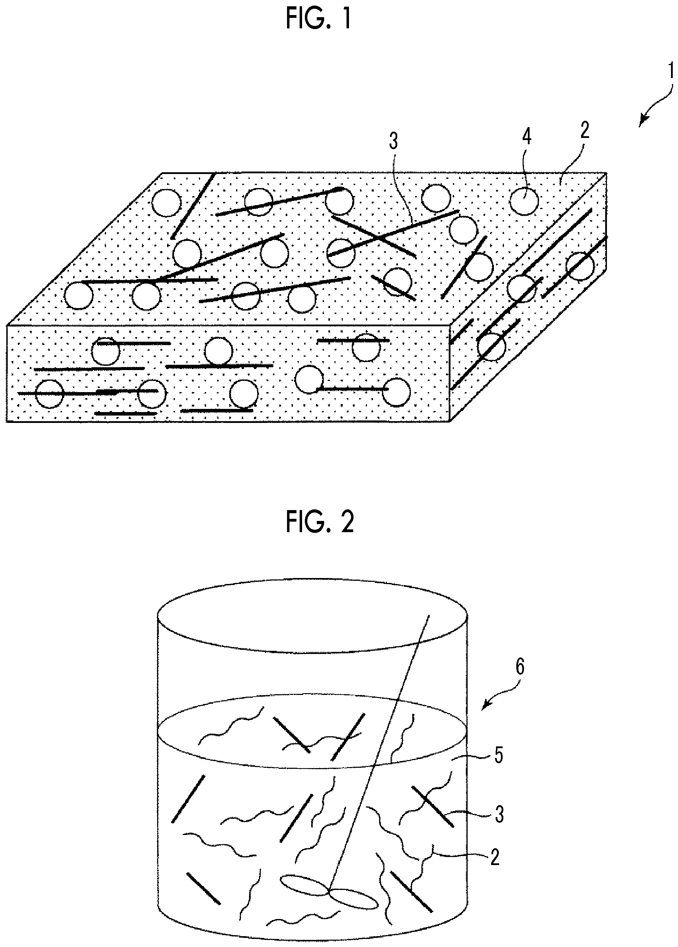

FIG. 1 is a perspective view schematically showing an embodiment of a composite molded article according to the present invention.

A composite molded article 1 shown in FIG. 1 includes a resin 2, fibers 3 provided to be dispersed in the resin 2, and holes 4 formed between the resin 2 and the fibers 3. In addition, a specific strength of the composite molded article 1 is 30 to 400 MPa·(g/cm³)⁻¹. In this manner, the composite molded article 1 a structure in which the fibers 3 and the holes 4 are dispersed in the matrix of the cured resin 2, and further has the specific strength in the above range. According to such a composite molded article 1, it is possible to achieve both weight reduction and high mechanical properties. Thus, for example, a molded article useful as a structural member in a field requiring both weight reduction and high mechanical properties, such as an interior material for transportation equipment can be obtained.

In addition, such a composite molded article 1 is molded into a desired shape. That is, since the composite molded article 1 can take an optimum shape according to the application, the composite molded article has high utility as an interior material, for example. From such a viewpoint, the shape of the composite molded article 1 may be a sheet-like shape (two-dimensional shape) or a solid shape (three-dimensional shape).

Hereinafter, components constituting the composite molded article 1 will be described in detail.

### (Resin)

The resin 2 imparts moldability or shape retainability to the composite molded article 1 or functions as a binder for binding the fibers 3 together. Accordingly, the resin 2 is not particularly limited as long as the resin has such functions. Examples thereof include a thermosetting resin such as a phenolic resin, an epoxy resin, an unsaturated polyester resin, a melamine resin, or a polyurethane, and a thermoplastic resin such as a polyamide resin (for example, nylon), a thermoplastic urethane resin, a polyolefin resin (for example, polyethylene or polypropylene), polycarbonate, a polyester resin (for example, polyethylene terephthalate or polybutylene terephthalate), polyacetal, polyphenylene sulfide, polyether ether ketone, a liquid crystal polymer, fluororesin (for example, polytetrafluoroethylene or polyvinylidene fluoride), modified polyphenylene ether, polysulfone, polyethersulfone, polyarylate, polyamideimide, polyetherimide, and thermoplastic polyimide. The resin 2 may include at least one of these resins and may include two or more thereof.

On the other hand, it is preferable that the resin 2 particularly includes a thermoplastic resin. Thus, the moldability of the composite molded article 1 can be particularly enhanced and a composite molded article 1 with higher dimensional accuracy can be obtained.

Further, it is preferable that the resin 2 include a super engineering plastic among the thermoplastic resins. Thus, in addition to the effect of the thermoplastic resin, the effect of high mechanical properties is imparted to the composite molded article 1. Examples of super engineering plastics include polysulfone, polyethersulfone, polyphenylene sulfide, polyether ether ketone, polyarylate, polyamideimide, polyetherimide, polyether ether ketone, liquid crystal polymer, and fluororesin.

The melting point of the resin 2 is not particularly limited but is preferably 200°C to 400°C. By using such as a resin 2, the mechanical properties and heat resistance of the composite molded article 1 can be sufficiently enhanced. Thus, for example, in a case where the composite molded article 1 is applied to an interior material for transportation equipment or the like, an interior material excellent in flame retardancy can be obtained.

In addition, the melting point of the resin 2 is more preferably 210°C to 390°C and even more preferably 260°C to 380°C. Thus, for example, in the case where the composite molded article 1 is applied to an interior material for transportation equipment or the like, an interior material further excellent in flame retardancy can be obtained.

In a case where the melting point of the resin 2 is lower than the lower limit, the mechanical properties and heat resistance of the resin 2 are not sufficient. Therefore, there is concern that the mechanical strength of the composite molded article 1 may be deteriorated at a high temperature or the flame retardancy based on heat resistance may be deteriorated depending on the configuration of the composite molded article 1. On the other hand, the melting point of the resin 2 may be higher than the upper limit, but there is concern that some physical properties (for example, impact resistance and the like) may be deteriorated accordingly.

The melting point of the resin 2 is, in principle, a crystal melting point, and can be measured using, for example, a differential scanning calorimeter (DSC-2920, manufactured by TA Instruments).

In addition, in a case where the resin 2 does not have the crystal melting point and has glass transition temperature, the melting point of the resin 2 in the present invention includes the glass transition temperature. The glass transition temperature can also be measured using the differential scanning calorimeter.

Further, in a case where the resin 2 is a thermosetting resin and has the crystal melting point and glass transition temperature, the melting point of the resin 2 in the present invention includes the heat resistant temperature of the cured product of the thermosetting resin. The heat resistant temperature is deflection temperature under load defined in test methods of thermoplastic plastics of JIS K 6911:1995.

### (Fibers)

The fibers 3 is provided for improving the mechanical properties of the composite molded article 1 or enhancing thermal conductivity.

For example, such fibers 3 can be obtained by cutting fiber yarns or long fibers into a predetermined length.

The average length of the fibers 3 is not particularly limited but is preferably 1 mm or more, more preferably 2 mm or more, and even more preferably 4 mm or more. By setting the average length of the fibers 3 within the above range, the mechanical properties of the composite molded article 1 can be sufficiently enhanced. Particularly, even in a case where the mechanical properties of the resin 2 are relatively low, the mechanical properties can be sufficiently compensated by the fibers 3. As a result, a composite molded article 1 having particularly good mechanical properties can be obtained.

Although not particularly limited, the upper limit of the average length of the fibers 3 is, for example, preferably 100 mm or less and more preferably 50 mm or less . Thus, when the fibers 3 are dispersed in a dispersion medium in the manufacturing of the composite molded article 1, the dispersibility thereof is improved. As a result, a molded article having a homogeneous structure can be obtained, and thus a composite molded article 1 excellent in mechanical properties can be finally obtained.

The average length of the fibers 3 is measured as follows. The length of each of 100 or more arbitrary fibers 3 taken out by dissolving the resin 2 of the composite molded article 1 or the like is measured. A value obtained by averaging the obtained length measurement values is taken as the average length of the fibers 3.

Although not particularly limited, the average diameter of the fibers 3 is preferably about 1 to 100 µm and more preferably about 5 to 80 µm. By setting the average diameter of the fibers 3 within the above range, while enhancing the mechanical properties of the composite molded article 1, the moldability at the time of manufacturing the composite molded article 1 can be enhanced.

The average diameter of the fibers 3 is measured as follows. The diameter of each of 100 or more arbitrary fibers 3 taken out by dissolving the resin 2 of the composite molded article 1 or the like is measured. A value obtained by averaging the obtained diameter measurement values is taken as the average diameter of the fibers 3.

In addition, a ratio (length/diameter) of the length to the diameter of the fibers 3 is preferably 10 or more and more preferably 100 or more. Thus, the fibers 3 more reliably exhibit the above effects.

Examples of such fibers 3 include a glass fiber, a carbon fiber, a metallic fiber such as an aluminum fiber, a copper fiber, a stainless steel fiber, a brass fiber, a titanium fiber, a steel fiber, or a phosphor bronze fiber, a natural fiber such as a cotton fiber, a silk fiber, or a wood fiber, a ceramic fiber such as an alumina fiber, wholly aromatic polyamide (aramid), wholly aromatic polyester, wholly aromatic polyester amide, wholly aromatic polyether, wholly aromatic polycarbonate, wholly aromatic polyazomethine, polyphenylene sulfide (PPS), poly(para-phenylene benzobisthiazole) (PBZT), polybenzimidazole (PBI), polyether ether ketone (PEEK), polyamideimide (PAI), polyimide, polytetrafluoroethylene (PTFE), and poly(para-phenylene-2,6-benzobisoxazole) (PBO), and fibers including at least one of these are used.

Among these, as the fibers 3, inorganic fibers such as glass fibers, carbon fibers, metallic fibers, and ceramic fibers are preferably used. By using inorganic fibers excellent in mechanical properties such as tensile strength, the mechanical properties of the composite molded article 1 can be particularly enhanced.

The fibers 3 may be subjected to a surface treatment such as coupling agent treatment, surfactant treatment, ultraviolet irradiation treatment, electron beam irradiation treatment, plasma irradiation treatment, or the like, if necessary.

Examples of the coupling agent in the treatment include amino group-containing alkoxysilanes such as N-(β-aminoethyl)-γ-aminopropyltrimethoxysilane, N-(β-aminoethyl)-γ-aminopropylmethyldimethoxysilane, γ-aminopropylmethyldimethoxysilane, γ-aminopropylmethyldiethoxysilane, γ-aminopropyltrimethoxysilane, γ-aminopropyltriethoxysilane, N-(β-aminoethyl)-γ-aminopropylmethyldimethoxysilane, N-(β-aminoethyl)-γ-aminopropylmethyldiethoxysilane, and hydrolysates thereof, and a coupling agent including at least one of these is used.

Although not particularly limited, the content of the fibers 3 in the composite molded article 1 is preferably about 5% to 300% by volume, more preferably about 10% to 150% by volume, and even more preferably about 20% to 90% by volume of the resin 2. By setting the content of the fibers 3 within the above range, the quantitative balance between the resin 2 and the fibers 3 is optimized. Therefore, even in a case where the composite molded article 1 includes the holes 4, the mechanical properties of the composite molded article 1 can be particularly enhanced. That is, in a case where the content of the fibers 3 is less than the lower limit, the content of the fibers 3 is relatively insufficient, and thus, depending on the composition of the resin 2, the length of the fibers 3, the constitutional material, the porosity, and the like, there is concern that the mechanical properties of the composite molded article 1 may be deteriorated. On the other hand, in a case where the content of the fibers 3 is more than the upper limit, the mechanical properties of the resin 2 is relatively insufficient, and thus, depending on the composition of the resin 2, the length of the fibers 3, the constitutional material, the porosity, and the like, there is concern that the mechanical properties of the composite molded article 1 may be deteriorated.

The shape of the fibers 3 shown in FIG. 1 is an example and is not limited to a linear shape as shown in the drawing.

### (Holes)

The holes 4 refer to spaces contained in the composite molded article 1. The holes 4 may be in a space state (closed cells) in which each hole or a plurality of holes joined together are isolated from the outside of the system (surrounded by the resin 2 or the like) . Further, the holes 4 may be in a space state (open cells) in which the holes communicate with the outside of the system (exposed to the outside of the composite molded article 1).

Out of these, although not particularly limited, it is preferable that the number of closed cells is larger than the number of open cells. Thus, even in a case where the composite molded article 1 includes the holes 4, the mechanical properties of the composite molded article 1 are not easily deteriorated. This is because since the closed cells are not easily collapsed, the mechanical properties of the composite molded article 1 are not easily deteriorated.

The number of closed cells being larger than the number of open cells refers to a state in which, when the cross section of the composite molded article 1 is observed in an enlarged manner, the total area of closed cells is larger than the total area of open cells.

In a case where the composite molded article 1 includes closed cells as the holes 4, the average diameter of the holes 4 is not particularly limited but is preferably about 2 to 300 µm and more preferably about 5 to 200 µm. Thus, it is possible to achieve both weight reduction of the composite molded article 1 by the holes 4 and suppression of deterioration of the mechanical properties of the composite molded article 1 by the holes 4. That is, in a case where the average diameter of the holes 4 is less than the lower limit, there is concern that the weight of the composite molded article 1 may not be easily reduced depending on the porosity. On the other hand, in a case where the average diameter of the holes 4 is more than the upper limit, depending on the porosity, the holes 4 are likely to become origins of refraction, cracks and the like, and thus there is concern that the mechanical properties of the composite molded article 1 may be deteriorated.

The average diameter of the holes is obtained as, when each circle having the same area as the area of each hole 4 is imagined from the cross section of the composite molded article 1, an average value of diameters (equivalent circle diameters) of these circles.

Although not particularly limited, the porosity of the composite molded article 1 is preferably about 5% to 90%, more preferably about 10% to 90%, even more preferably about 15% to 87.5%, and particularly preferably about 20% to 85%. By setting the porosity within the above range, both weight reduction and mechanical properties of the composite molded article 1 can be achieved with good balance. That is, in a case where the porosity is lower than the lower limit, depending on the composition of the resin 2, the length of the fibers 3, the constitutional material, and the like, there is concern that the weight reduction of the composite molded article 1 may not be sufficient. On the other hand, in a case where the porosity is higher than the upper limit, depending on the composition of the resin 2, the length of the fibers 3, the constitutional material, and the like, there is concern that the mechanical properties of the composite molded article 1 may be deteriorated. In addition, in a case where the holes 4 include closed cells, the heat insulation of the composite molded article 1 is improved. Thus, the thermal conductivity in the composite molded article 1 is deteriorated and thus flame retardancy can be enhanced.

The porosity of the composite molded article 1 is obtained as, for example, a ratio of the area of the holes 4 (the area of the holes 4) in the area of the cross section of the composite molded article 1.

### (Pulp)

The composite molded article 1 may include pulp if necessary. The pulp is a fiber material having a fibrillar structure and is different from the fibers 3. The pulp can be obtained by, for example, mechanically or chemically turning a fiber material into fibrils.

Examples of the pulp include fibrils of a cellulose fiber such as linter pulp or wood pulp, a natural fiber such as kenaf, jute, or bamboo, or an organic fiber such as a para-type wholly aromatic polyamide fiber (aramid fiber) or a copolymer thereof, an aromatic polyester fiber, a polybenzazole fiber, a meta-type aramid fiber or a copolymer thereof, an acrylic fiber, an acrylonitrile fiber, a polyimide fiber, or a polyamide fiber, and among these, at least one pulp is used.

Although not particularly limited, the content of the pulp in the composite molded article 1 is preferably about 0.5% to 10% by mass, more preferably about 1% to 8% by mass, and even more preferably about 1.5% to 5% by mass of the resin 2. Thus, it is possible to realize a composite molded article 1 having better mechanical properties and thermal conductivity.

### (Agglomerating Agent)

The composite molded article 1 may include an agglomerating agent if necessary.

Examples of the agglomerating agent include cationic polymer agglomerating agents, anionic polymer agglomerating agents, nonionic polymer agglomerating agents, and amphoteric polymer agglomerating agents, and among these, at least one agglomerating agent is used.

More specific examples of the agglomerating agent include cationic polyacrylamides, anionic polyacrylamides, Hoffman polyacrylamides, Man Nick polyacrylamides, amphoteric copolymer polyacrylamides, cationized starch, amphoteric starch, and polyethylene oxides.

Although not particularly limited, the content of the agglomerating agent in the composite molded article 1 is preferably about 0.01% to 1.5% by mass, more preferably about 0.05% to 1% by mass, and more preferably about 0.1% to 0.5% by mass of the resin 2. In such a case, at the time of manufacturing the composite molded article 1 by, for example, a papermaking method, it is possible to more easily and stably carry out a dewatering treatment or the like. Thus, a composite molded article 1 which is homogeneous and excellent in mechanical properties can be finally obtained.

### (Other Additives)

The composite molded article 1 may include other additives if necessary.

Examples of the additives include inorganic powder, metal powder, antioxidant, an ultraviolet absorber, a flame retardant, a mold release agent, a plasticizer, a curing catalyst, a curing accelerator, a pigment, a light-resistant agent, an antistatic agent, an antibacterial agent, a conducting agent, and a dispersing agent, and among these, at least one additive is used.

Here, the specific strength of the composite molded article 1 is set to 30 to 400 MPa·(g/cm³)⁻¹. Thus, a composite molded article 1 that achieves both weight reduction and improvement of mechanical properties can be obtained. In a case where the specific strength is less than the lower limit, it can be said that the bending strength is small for being heavy and thus, there is concern that the composite molded article may not be suitable for, for example, a structural member in a field requiring both weight reduction and high mechanical properties such as an interior material for transportation equipment. On the other hand, in a case where the specific strength is more than the upper limit, it can be said that the bending strength is large for being heavy, but depending on the balance with other physical properties, the impact resistance is deteriorated or variations are likely to occur due to manufacturing conditions. Thus, there is concern that it may be difficult to increase the manufacturing yield.

The specific strength of the composite molded article 1 is preferably about 40 to 350 MPa·(g/cm³)⁻¹, more preferably about 50 to 300 MPa·(g/cm³)⁻¹, and even more preferably about 50 to 250 MPa·(g/cm³)⁻¹.

The specific strength of the composite molded article 1 is obtained by dividing bending strength (unit: MPa) by density (unit: g/cm³).

Further, it is preferable that the composite molded article 1 has properties shown below.

First, although not particularly limited, the density of the composite molded article 1 is preferably about 0.05 to 1.6 g/cm³, more preferably about 0.1 to 1.55 g/cm³, and even more preferably about 0.2 to 1.5 g/cm³. Thus, a composite molded article 1 that achieves both weight reduction and improvement of mechanical properties can be obtained.

The density is measured according to a test method defined in A method of JIS K 7112:1999.

Although not particularly limited, the bending strength of the composite molded article 1 is preferably about 50 to 400 MPa, more preferably about 70 to 350 MPa, and even more preferably about 100 to 300 MPa. Thus, a composite molded article 1 having sufficiently high mechanical properties can be obtained.

The bending strength of the composite molded article 1 is measured by a test method defined in ISO 178:2001 at room temperature (25°C) .

Although not particularly limited, the specific elastic modulus of the composite molded article 1 is about 2 to 30 GPa·(g/cm³)⁻¹, more preferably about 3 to 25 GPa·(g/cm³)⁻¹, and even more preferably about 4 to 20 GPa·(g/cm³)⁻¹. Thus, a composite molded article 1 that achieves both weight reduction and mechanical properties can be obtained.

The specific elastic modulus of the composite molded article 1 is obtained by dividing bending elastic modulus (unit: GPa) by density (unit: g/cm³) . Then, the bending elastic modulus is measured by a test method defined in ISO 178:2001 at room temperature (25°C) .

Although not particularly limited, the peak heat release rate of the composite molded article 1 is preferably 50 kW/m² or less, more preferably 45 kW/m² or less, and even more preferably 40 kW/m² or less. Thus, while reducing the weight of the composite molded article 1, the flame retardancy can be further enhanced. That is, it is possible to achieve both weight reduction and flame retardancy.

Although the lower limit of the peak heat release rate of the composite molded article 1 is not particularly limited, the lower limit of the peak heat release rate is set to, for example, 1 kW/m² or more. Thus, it is possible to optimize the balance between weight reduction and flame retardancy. Thus, by applying such a composite molded article 1 to, for example, an interior material for transportation equipment, an interior material that achieves desired weight reduction (lightweight) and flame retardancy at a high degree is realized.

The peak heat release rate is measured by a heat release test according to FAR 25.853 (Appendix F, Part IV).

Although not particularly limited, the 2-minute total heat release (total heat release w/in first 2 minutes) of the composite molded article 1 is preferably about 50 kW·min/m² or less, more preferably 45 kW·min/m² or less, and even more preferably 40 kW·min/m² or less. Thus, the flame retardancy can be further enhanced while reducing the weight of the composite molded article 1. That is, it is possible to achieve both weight reduction and flame retardancy.

Although not particularly limited, the lower limit of the 2-minute total heat release of the composite molded article 1 is set to, for example, 1 kW·min/m² or more. Thus, it is possible to optimize the balance between weight reduction and flame retardancy. Thus, by applying such a composite molded article 1 to, for example, an interior material for transportation equipment, an interior material that achieves desired weight reduction (lightweight) and flame retardancy at a high degree is realized.

The 2-minute total heat release is measured by a heat release test according to FAR 25.853 (Appendix F, Part IV).

It is preferable that both the above-described peak heat release rate and the above-described 2-minute total heat release are in the above ranges. Thus, a composite molded article 1 in which the balance between weight reduction and flame retardancy is optimized can be obtained. Such a composite molded article 1 is particularly useful as, for example, an interior material for transportation equipment.

### <Method of Manufacturing Composite Molded Article>

Next, an embodiment of a method of manufacturing a composite molded article of the present invention will be described. In the following description, as an example, a method of manufacturing the above-described composite molded article 1 will be described.

FIGs. 2 to 6 are views respectively illustrating an embodiment of a method of manufacturing a composite molded article according to the present invention.

The method of manufacturing the composite molded article 1 according to the embodiment includes a step of performing papermaking using a dispersion liquid including a resin 2 and fibers 3 to form an intermediate 10 (an embodiment of an intermediate for a composite molded article of the present invention), and a step of press-molding the intermediate 10 while heating and melting at least a part of the resin 2 to obtain a composite molded article 1. Hereinafter, each step will be sequentially described.
[1] First, as shown in FIG. 2, a dispersion liquid 6 including a resin 2, fibers 3, and a dispersion medium 5 for dispersing the resin and the fibers is prepared. The prepared dispersion liquid 6 is sufficiently stirred and mixed. To the dispersion liquid 6, if necessary, the above-described agglomerating agent or pulp, other additives, and the like may be added.

As the resin 2, for example, a resin having a melting point of 200°C to 400°C is used.

The shape of the resin 2 is not particularly limited. The shape of the resin may be a granular (powder) shape such as a substantially spherical particle shape, a thin film particle shape or the like, but is preferably a fibrous shape. Thus, in the papermaking described later, the resin 2 can be made into a sheet with the fibers 3. As a result, the resin 2 and the fibers 3 can be intertwined and an intermediate with a small apparent density can be easily obtained. In FIG. 2 and other drawings, the resin 2 is represented by a broken line, but this is a schematic illustration of the fibrous resin 2, which is an example of shape.

In a case where the resin 2 includes a thermosetting resin, the state of the thermosetting resin is preferably semi-cured state. The semi-cured thermosetting resin is cured after the resin is molded into a desired shape by heating and pressing after manufacturing the intermediate 10. Thus, a composite molded article 1 in which the properties of the thermosetting resin are utilized can be obtained.

On the other hand, as the fibers 3, for example, fibers having a melting point higher than that of the resin 2 are used. By using such fibers 3, in the step described later, when the intermediate is press-molded while being heated, only the resin 2 can be selectively melted. Thus, the resin 2 can be melted and dispersed around the fibers 3 so that a homogeneous composite molded article 1 can be obtained.

It is preferable that the melting point of the fibers 3 is higher than the melting point of the resin 2, and further, a difference therebetween is more preferably 10°C or more and even more preferably 50°C or more.

Among these, as the fibers 3, inorganic fibers such as glass fiber, carbon fibers, metallic fibers, and ceramic fibers are preferably used. By using inorganic fibers excellent in mechanical properties such as tensile strength, the mechanical properties of the composite molded article 1 can be particularly enhanced. In addition, since inorganic fibers generally have a very high melting point, there is almost no concern that the fibers may be melted when the intermediate 10 is heated. Therefore, even in a case where a material having a high melting point is used as the constitutional material of the resin 2, it is possible to reliably manufacture the composite molded article 1.

In addition, as the dispersion medium 5, a dispersion medium which does not easily dissolve the resin 2 and the fibers 3 and does not easily volatilize in the process of dispersing the resin 2 and the fibers 3 is preferably used. In addition, a dispersion medium which is easily removed is preferably used. From this viewpoint, the boiling point of the dispersion medium 5 is preferably about 50°C to 200°C.

Examples of the dispersion medium 5 include water, alcohols such as ethanol, 1-propanol, 1-butanol, and ethylene glycol, ketones such as acetone, methyl ethyl ketone, 2-heptanone, and cyclohexanone, esters such as ethyl acetate, butyl acetate, and methyl acetoacetate, and ethers such as tetrahydrofuran, isopropyl ether, dioxane, and furfural. Among these, at least one is used.

Among these, water is preferably used. Since water is easily available, has a low environmental load and is also highly safe, water is useful as the dispersion medium 5.

Subsequently, papermaking is performed using the prepared dispersion liquid 6. Thus, the intermediate 10 (intermediate for a composite molded article) for manufacturing a composite molded article 1 is obtained.

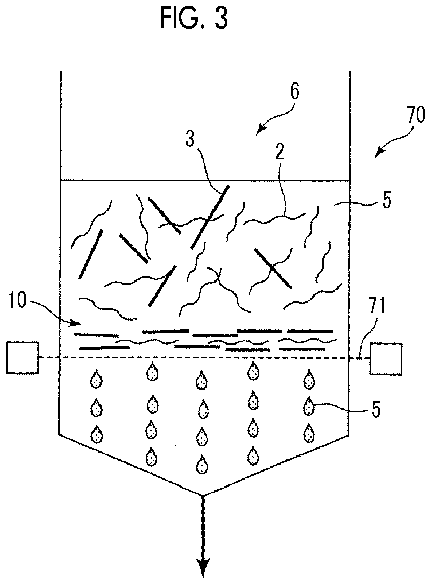

Specifically, first, as shown in FIG. 3, a container 70 provided with a filter 71 on the bottom is prepared.

Next, the dispersion liquid 6 is supplied into in the container 70. Then, the dispersion medium 5 in the dispersion liquid 6 is discharged from the bottom of the container 70 to the outside through the filter 71. Thus, the resin 2 and the fibers 3 which are dispersoids in the dispersion liquid 6 remain on the filter 71 (papermaking). In the above-described manner, an intermediate 10 is obtained on the filter 71.

At this time, by appropriately selecting the shape of the filter 71, an intermediate 10 having a desired shape can be manufactured.

The intermediate 10 thus obtained may or may not include the dispersion medium 5.

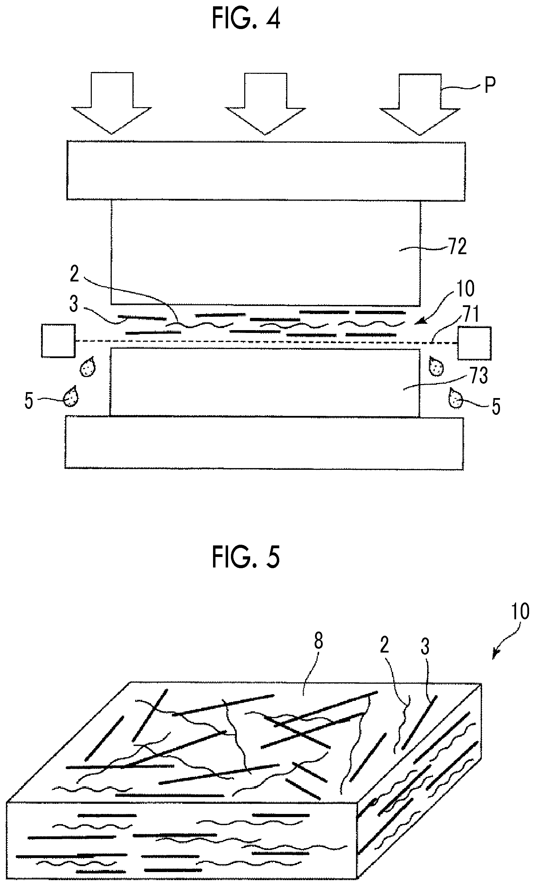

Thereafter, if necessary, as shown in FIG. 4, the intermediate 10 is arranged between a press mold 72 and a press mold 73 and the intermediate 10 is press-molded by a cavity (not shown) to be formed between the press mold 72 and the press mold 73.

For example, by lowering the press mold 72 as indicated by an arrow P, the intermediate 10 is compressed between the press mold 72 and the press mold 73. Thus, the dispersion medium 5 remaining in the intermediate 10 is sufficiently discharged so that the intermediate 10 can be sufficiently dried.

If necessary, the intermediate 10 may be further dried using a dryer or the like.

The intermediate 10 thus obtained includes the resin 2 and the fibers 3 and has a small apparent density. That is, since the resin 2 and the fibers 3 are intertwined, voids having a relatively large volume are formed between the resin and the fibers. Therefore, the apparent density of the entirety of the intermediate 10 is decreased. Particularly, in a case where the resin 2 is fibrous, the intertwining of the resin 2 and the fibers 3 is very complicated. Therefore, voids having an extremely large volume are formed between the resin and the fibers and thus the apparent density of the intermediate 10 is particularly decreased. As a result, a composite molded article 1 having a wide range of porosity can be easily manufactured using the intermediate 10 as described later.

Although not particularly limited, the average length of the fibrous resin 2 is preferably 1 mm or more, more preferably 2 mm or more, and even more preferably 4 mm or more. By setting the average length of the fibrous resin 2 within the above range, the degree of intertwining of the fibrous resin 2 and the fibers 3 becomes greater. Thus, a realizable range of porosity in the composite molded article 1 to be manufactured can be widened.

Although not particularly limited, the upper limit of the average length of the fibrous resin 2 is, for example, preferably 100 mm or less and more preferably 50 mm or less. Thus, when the fibrous resin 2 can be dispersed in the dispersion medium in the manufacturing of the composite molded article 1, the dispersibility thereof is improved. As a result, a molded article having a homogeneous structure can be obtained, and thus a composite molded article 1 excellent in mechanical properties can be finally obtained.

The average length of the fibrous resin 2 refers to a value obtained by measuring the length of each of 100 or more arbitrary fibrous resin fibers 2 and averaging the measured values.

The average length of the fibrous resin 2 is preferably about 10% to 1000% and more preferably about 20% to 500% of the average length of the fibers 3. Accordingly, since the degree of intertwining of the fibrous resin 2 and the fibers 3 becomes more remarkable, the shape retainability of the intermediate 10 is further improved and an intermediate 10 by which a composite molded article 1 of a wider range of porosity can be easily manufactured can be obtained.

In addition, although not particularly limited, the average diameter of the fibrous resin 2 is preferably about 1 to 100 µm and more preferably about 5 to 80 µm. By setting the average diameter of the fibrous resin 2 within the above range, the fibrous resin 2 itself has a certain degree of mechanical strength and thus a state in which the fibrous resin 2 is uniformly dispersed in the intermediate 10 can be easily maintained. As a result, the realizable range of porosity in the composite molded article 1 to be manufactured can be more widened.

The average diameter of the fibrous resin 2 refers to a value obtained by measuring the diameter of each of 100 or more arbitrary fibrous resin fibers 2 and averaging the measured values.

The ratio (length/diameter) of length to diameter of the fibrous resin 2 is preferably 10 or more and more preferably 100 or more. Thus, the fibrous resin 2 more reliably exhibits the above-described effects.

In this manner, the intermediate 10 includes the resin 2, the fibers 3 having a melting point higher than that of the resin 2, and holes 8 (refer to FIG. 5). Since the intermediate 10 includes a large number of holes 8, the porosity is increased. Specifically, although not particularly limited, the porosity of the intermediate 10 is preferably about 25% to 99% and more preferably about 40% to 99%. Such an intermediate 10 has a very high porosity and moldability when heated in the step described later. The moldability is exhibited by heating and melting the resin 2. In a case where the resin 2 is melted and press-molded, the holes 8 are filled with the resin 2. As a result, the porosity is gradually decreased. Accordingly, the porosity of the composite molded article 1 to be finally obtained is determined according to the amount of melting of resin 2, the applied pressure, and the like.

Therefore, the intermediate 10 has a high porosity as described above and thus the porosity of the composite molded article 1 to be manufactured can be adjusted in a wide range. As a result, a composite molded article 1 having a desired porosity can be easily manufactured.

There is a high possibility that almost all of the holes 8 included in the intermediate 10 are open cells. Therefore, by calculating a difference between the apparent volume obtained from the external shape of the intermediate 10 and the volume excluding the open cells obtained by immersing the intermediate 10 in water, the volume ration of the holes 8, that is, porosity can be obtained.

Further, it is preferable that the intermediate 10 further includes a thermoplastic resin having a melting point of lower than 200°C (hereinafter, referred to as "low melting point resin") . By incorporating the low melting point resin in the intermediate, the shape retainability of the intermediate 10 can be further enhanced. That is, when the intermediate 10 is heated at a temperature lower than the heating temperature in press molding (for example, drying or the like), the low melting point resin is melted and thus the fibers 3, the resin 2, or the resin 2 and the fibers 3 are bonded together. Thus, the shape of the intermediate 10 is easily maintained. As a result, in the composite molded article 1 to be finally obtained, a desired porosity is easily obtained and the dimensional accuracy and mechanical properties are not easily deteriorated. In addition, since the intermediate 10 is not easily collapsed, the intermediate 10 is easily grasped and the portability becomes high. Thus, it is possible to more easily perform the operation of packing and carrying the intermediate 10.

The shape of the low melting point resin before melting is not particularly limited and may be a granular (powder) shape such as a substantially spherical particle shape, a thin film particle shape or the like, or may be a fibrous shape.

Although not particularly limited, the content of the low melting point resin in the intermediate 10 is preferably about 0.5% to 30% by volume, more preferably about 1% to 20% by volume, and even more preferably about 2% to 10% by volume. Thus, the effect of enhancing the shape retainability of the intermediate 10 by adding the low melting point resin is secured as necessary and sufficiently without impairing the above-described effects.

The melting point of the low melting point resin is lower than the melting point of the resin 2 by preferably about 10°C to 250°C and more preferably about 50°C to 200°C. Due to the difference in melting point, the low melting point resin is melted om the step of drying or the like and is easily thermally decomposed and removed at the time of press molding. Therefore, the function of the low melting point resin can be fully exhibited. That is, the low melting point resin acts to maintain the shape in the intermediate 10 and the large amount of the low melting point resin is present in the composite molded article 1 so that deterioration in mechanical properties can be suppressed.

Although not particularly limited, the content of the fibers 3 in the intermediate 10 is preferably about 20% to 300% by volume, more preferably about 30% to 150% by volume, and even more preferably about 40% to 90% by volume of the resin 2. By setting the content of the fibers 3 within the above range, the quantitative balance between the resin 2 and the fibers 3 is optimized. Thus, while maintaining the shape retainability of the intermediate 10, the porosity is adjusted in a wider range and the intermediate 10 by which the composite molded article 1 can be manufactured can be obtained. In a case where the content of the fibers 3 is less than the lower limit, the content of the fibers 3 is relatively insufficient, and thus depending on the composition of the resin 2, the length of the fibers 3, the constitutional material, the porosity, and the like, there is concern that the mechanical properties of the composite molded article 1 may be deteriorated. On the other hand, in a case where the content of the fibers 3 is more than the upper limit, the content of the resin 2 is relatively insufficient, and thus depending on the composition of the resin 2, the length of the fibers 3, the constitutional material, the porosity, and the like, there is concern that the mechanical properties of the composite molded article 1 may be deteriorated.

[2] Next, the intermediate 10 is press-molded while being heated. Thus, at least a part of the resin 2 in the intermediate 10 is melted to obtain a composite molded article 1.

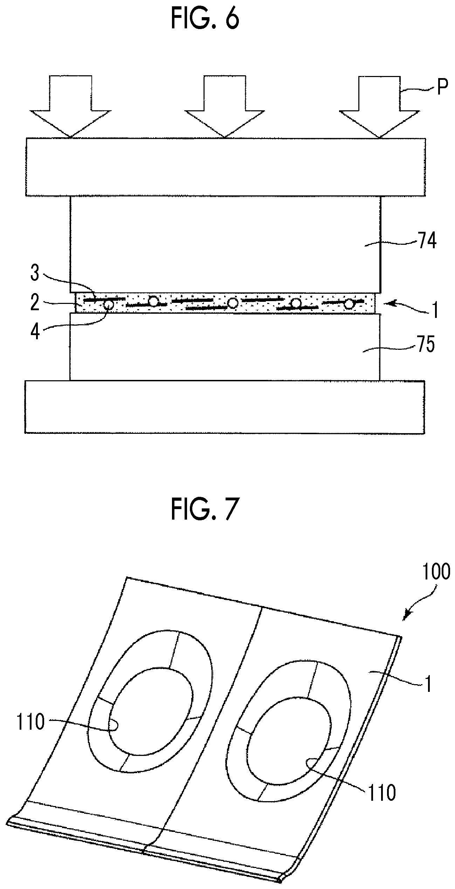

Specifically, as shown in FIG. 6, the intermediate 10 is arranged between a mold 74 and a mold 75 and the intermediate 10 is press-molded by a cavity (not shown) to be formed between the mold 74 and the mold 75.

For example, by lowering the mold 74 as indicated by the arrow P, the intermediate 10 is compressed between the mold 74 and the mold 75. Since heating is carried out at the same time in this case, at least a part of the resin 2 is melted, flows between the fibers 3, and functions as a binder for binding the fibers 3 together. Also, some of the holes 8 of the intermediate 10 are filled with the molten resin 2. Then, the entire volume is decreased by the press molding and the intermediate is deformed into a desired shape. As a result, the fibers 3 are bonded together by the molten resin 2 and thus a composite molded article 1 having a porosity lower than that of the intermediate 10 can be obtained. FIG. 6 shows a state after the intermediate 10 is formed into the composite molded article 1.

Since the resin 2 is cured (including solidification, the same applies below) by cooling after molding, the intermediate 10 is cured in a state in which the intermediate contains the holes therein. As a result, as shown in FIG. 6, the composite molded article 1 including the resin 2, the fibers 3, and the holes 4 can be obtained.

The decrease width of the porosity decreased in the step can be adjusted according to the heating conditions and pressure conditions of the intermediate 10. That is, when the heating temperature is set to be low, the heating time is set to be short, or the pressing force is set to be small, decrease width of the porosity can be made relatively small. On the other hand, when the heating temperature is set to be high, the heating time is set to be long, or the pressing force is set to be great, the decrease width of the porosity can be made relatively large. As a result, in the composite molded article 1 to be manufactured, while the change width of the porosity is taken wide enough, the composite molded article 1 can be manufactured. That is, a composite molded article 1 having a desired porosity can be manufactured. In a case where a composite molded article 1 having a high porosity is desired to be obtained, it is preferable that a spacer is provided between the intermediate 10 and the mold 74 and the mold 75, and the intermediate 10 is heated and press-molded. Thus, a composite molded article 1 having a high porosity can be easily obtained.

Although not particularly limited, the decrease width of the porosity with the press molding is preferably about 5% to 90% and more preferably about 10% to 80%. It can be said that the decrease width in such a range is a proof that the resin 2 is melted as necessary and sufficiently and the fibers 3 are bonded together. Accordingly, a composite molded article 1 that achieves both weight reduction and high mechanical properties can be thus obtained.

Although not particularly limited, the molding pressure at the time of press molding is preferably about 0.03 to 13 MPa, more preferably about 0.05 to 10 MPa, and even more preferably about 0.1 to 8 MPa. By setting the molding pressure within the above range, the resin 2 and the fibers 3 of the intermediate 10 contact with each other with sufficient frequency and thus it is possible to reliably bind the fibers 3 together by the molten resin 2. As a result, the shape retainability of the composite molded article 1 can be further enhanced. In a case where the molding pressure is lower than the lower limit, the frequency of contact decreases and thus, depending on the porosity of the intermediate 10, there is concern that the mechanical properties of the composite molded article 1 may not be sufficient. On the other hand, in a case where the molding pressure is more than the upper limit, the frequency of contact is excessive. Thus, depending on the porosity of the intermediate 10, the porosity of the composite molded article 1 is excessively decreased and there is concern that the weight reduction is insufficient.

In addition, the heating temperature at the time of press molding is appropriately set according to the melting point of the resin 2 and is not particularly limited. The heating temperature is preferably about 150°C to 350°C and more preferably about 160°C to 300°C.

The heating time at this time is appropriately set according to the heating temperature and is preferably about 5 to 180 minutes and more preferably about 10 to 60 minutes.

By setting the heating conditions as described above, the resin 2 can be melted as necessary and sufficiently and thus a composite molded article 1 that achieves both weight reduction and high mechanical properties can be obtained.

Since the resin 2 is melted in the composite molded article 1, the original shape of the resin 2 is often lost. However, the original shape of the resin 2 does not be completely lost and may be partially retained. That is, the resin 2 included in the composite molded article 1 may retain the shape such a granular shape or a fibrous shape. Thus, since voids are easily formed between the resin 2 and the fibers 3 and between the fibers 3, a composite molded article 1 having a high porosity can be easily realized.

In addition, the peak heat release rate and the 2-minute total heat release of the above-described composite molded article 1 can be controlled by the constitutional materials and the contents of the resin 2 and the fibers 3. For example, by using a resin having a high melting point as the resin 2 or using fibers having high heat resistance as the fibers 3, the peak heat release rate and the 2-minute total heat release of the composite molded article 1 can be enhanced.

The method of manufacturing the composite molded article 1 is not limited to the above method and other methods, for example, an injection molding method may be used.

### <Interior Material for Transportation Equipment >

Next, an embodiment of an interior material for transportation equipment of the present invention will be described.

FIG. 7 is a perspective view schematically showing an embodiment of an interior material for transportation equipment of the present invention.

An interior material for transportation equipment 100 shown in FIG. 7 includes the composite molded article 1 in which an opening 110, which becomes a window, is formed. Thus, an interior material for transportation equipment 100 that achieves both weight reduction and high mechanical properties is realized.

Examples of the interior material for transportation equipment 100 include various interior materials for aircrafts such as a cabin ceiling panel, a cabin interior panel, a cabin floor, a cockpit ceiling panel, a cockpit interior panel, a cockpit floor, a baggage locker wall, a storage locker wall, a door lining, a window cover, various seats such as a captain seat, a co-pilot seat, a seat for a cabin attendant, and a passenger seat, and interior materials for toilet rooms, interior materials for automobiles, interior materials for ships, interior materials for railways, and interior materials for spaceships.

The composite molded article, the intermediate for a composite molded article, the method of manufacturing a composite molded article, and the interior material for transportation equipment of the present invention has been described above based on the embodiments shown in the drawings, but the present invention is not limited thereto.

For example, arbitrary elements may be added to the embodiments of the composite molded article, the intermediate for a composite molded article, and the interior material for transportation equipment of the present invention.

In addition, an arbitrary step may be added to the embodiment of the method of manufacturing a composite molded article of the present invention.

### Examples

Next, specific examples of the present invention will be described.

### 1. Manufacturing of Composite Molded Article

### (Example 1)

First, polyphenylene sulfide (PPS) resin fibers (average length: 10 mm) and PAN-based carbon fibers (average length: 13 mm) were added to water and the materials were stirred with a disperser for 30 minutes to obtain slurry. Here, 10000 parts by mass of water was used with respect to a total of 100 parts by mass of the resin and the fibers.

Next, 0.2% by mass of an agglomerating agent (synthetic smectite: SMECTON (manufactured by Kunimine Industries Co., Ltd.)), dissolved in water in advance, with respect to the total mass of the resin and the fibers was added thereto and the mixture was agglomerated in a flock pattern.

Next, the obtained agglomerated substance was separated from water using a metal net having 30 meshes. Thus, an intermediate was obtained. Then, the intermediate was pressed under dewatering and dried using a dryer at 50°C for 5 hours.

Next, the obtained intermediate was put into a cavity of molds and press-molded while being heated to obtain a sheet-like composite molded article having a size of length 80 mm × width 50 mm × thickness 4 mm.

### (Examples 2 to 10)

Composite molded articles were obtained in the same manner as in Example 1 except that the components in the slurry were changed as shown in Table 1.

### (Comparative Examples 1 to 4)

Composite molded articles were obtained in the same manner as in Example 1 except that the resin in the slurry was changed as shown in Table 1, and the fibers were not added.

### 2. Evaluation of Composite Molded Article

### 2.1 Evaluation of Density (Specific Gravity)

Regarding the composite molded articles of each Example and each Comparative Example, the density was measured at 25°C by a method according to A method defined in JIS K 7112:1999.

The measurement results are shown in Table 1.

In addition, the porosity of each composite molded article was measured, and the measurement results are collectively shown in Table 1.

### 2.2 Evaluation of Mechanical Properties

Regarding the composite molded articles of each Example and each Comparative Example, the bending strength and the bending elastic modulus were measured at 25°C by a method according to ISO178:2001.

The measurement results are shown in Table 1.

Further, the specific strength and the specific elastic modulus were calculated by dividing the measured bending strength and bending elastic modulus by the density respectively.

The measurement results are shown in Table 1.

Regarding the composite molded articles of each Example and each Comparative Example, the impact resistance by a steel ball drop test was evaluated. The evaluation of the impact resistance was performed such that a steel ball was repeatedly dropped and collided with the article until damage was observed in the composite molded article, and the impact resistance was evaluated based on the number of times of dropping with reference to the following evaluation criteria.

### <Evaluation Criteria of Impact Resistance>

A: The number of times of dropping until damage was observed is particularly large.
B: The number of times of dropping until damage was observed is slightly large.
C: The number of times of dropping until damage was observed is small.

### 2.3 Evaluation of Heat Release

Regarding the composite molded articles of each Example and each Comparative Example, the peak heat release rate and the 2-minute total heat release were measured. The measurement was performed by a heat release test according to FAR 25.853 (Appendix F, Part IV).

The measurement results are shown in Table 1.

### 2.4 Evaluation of Flame Propagation

Regarding the composite molded articles of each Example and each Comparative Example, the sample flaming time, the drop flaming time, and the burn length were measured. The measurement was performed by a flame propagation test of a heat insulating material according to FAR 25.853 (Appendix F, Part IV). Then, the measurement results were evaluated based on the following evaluation criteria.

### <Evaluation Criteria of Sample Flaming Time>

A: The sample flaming time is shorter than 15 seconds.
B: The sample flaming time is 15 seconds or longer.

### <Evaluation Criteria of Drop Flaming Time>

A: The drop flaming time is shorter than 3 seconds.
B: The drop flaming time is 3 seconds or longer.

### <Evaluation Criteria of Burn Length>

A: The burn length is shorter than 152 mm.
B: The burn length is 152 mm or longer.

### 2.5 Evaluation of Smokablity

Regarding the composite molded articles of each Example and each Comparative Example, the smoke density after 4 minutes (specific optical density) was measured. The measurement was performed by a flaming mode of a smoke density measurement test according to FAR 25.853(Appendix F, Part V). Then, the measurement results were evaluated based on the following evaluation criteria.

### <Evaluation Criteria of Smoke Density After 4 Minutes>

A: The specific optical density after 4 minutes is less than 200.
B: The specific optical density after 4 minutes is 200 or higher.

### 2.6 Evaluation of Gas Toxicity

Regarding the composite molded articles of each Example and each Comparative Example, the gas toxicity after 4 minutes was analyzed. The analysis was carried out by a smoke toxicity test based on BSS 7239. Then, the analysis s were evaluated for each gas component based on the following evaluation criteria.

### <Evaluation Criteria of Gas Toxicity After 4 Minutes>

A: The concentration after 4 minutes is within the following ranges.
B: The concentration after 4 minutes is out of the following ranges.
   HCN < 150 ppm
   CO < 1000 ppm
   NO, NO₂ < 100 ppm
   SO₂ < 100 ppm
   HF < 100 ppm
   HCl < 150 ppm

**[Table 1]**

| | | | Unit | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|---|---|---|
| Slurry | Thermoplastic resin | PPS | % by volume | 60 | 55 | | | 60 | 55 | | | | | 100 | | | |
| | | PEI | % by volume | | | 60 | 55 | | | 60 | 55 | | | | 100 | | |
| | | PEEK | % by volume | | | | | | | | | 60 | 55 | | | 100 | |
| | | PP | % by volume | | | | | | | | | | | | | | 100 |
| | Low melting point resin | PE | % by volume | | 5 | | 5 | | 5 | | 5 | | 5 | | | | |
| | Fiber | Carbon fiber | % by volume | 40 | 40 | 40 | 40 | | | | | 40 | 40 | | | | |
| | | Glass fiber | % by volume | | | | | 40 | 40 | 30 | 40 | | | | | | |
| | Total | | % by volume | 100 | 100 | 100 | 100 | 100 | 100 | 90 | 100 | 100 | 100 | 100 | 100 | 100 | 100 |
| | Melting point of | resin | °C | 280 | 280 | 217 | 217 | 280 | 280 | 217 | 217 | 343 | 343 | 280 | 217 | 343 | 170 |
| Evaluatio n results of composite molded article | Density (specific | gravity) | g/cm³ | 1.0 | 1.0 | 1.0 | 1.0 | 1.2 | 1.2 | 1.2 | 1.2 | 0.9 | 0.9 | 1.3 | 1.3 | 1.3 | 0.9 |
| | Porosity | | % | 34.6 | 34.6 | 34.6 | 34.6 | 33.7 | 33.7 | 23.1 | 33.7 | 41.2 | 41.2 | 0.0 | 0.0 | 0.0 | 0.0 |
| | Mechanical properties | Bending strength | MPa | 218 | 156 | 220 | 188 | 131 | 100 | 133 | 102 | 260 | 270 | 96 | 152 | 110 | 41 |
| | | Specific strength | MPa·(g/cm³)⁻¹ | 218 | 156 | 220 | 188 | 109 | 83 | 111 | 85 | 289 | 300 | 74 | 117 | 85 | 46 |
| | | Bending elastic modulus | GPa | 15.7 | 14.5 | 16.5 | 15.4 | 9.7 | 7.4 | 9.8 | 7.5 | 19.2 | 20.0 | 3.3 | 3.0 | 4.1 | 1.1 |
| | | Specific elastic modulus | GPa·(g/cm³)⁻¹ | 15.7 | 14.5 | 16.5 | 15.4 | 8.1 | 6.2 | 8.2 | 6.3 | 21.4 | 22.2 | 2.5 | 2.3 | 3.2 | 1.2 |
| | | Impact resistance | - | A | A | A | A | A | A | A | A | A | A | B | B | B | B |
| | Heat release | Peak heat release rate | kW/m² | 14.61 | 14.52 | 7.66 | 7.78 | 16.07 | 15.97 | 8.43 | 8.56 | 17.53 | 17.42 | 16 | 9 | 19 | 80 |
| | | 2-Minute total heat release | kW·min/m² | 26.46 | 26.13 | 25.98 | 25.74 | 29.11 | 28.74 | 28.58 | 28.31 | 31.75 | 31.36 | 28 | 28 | 33 | 110 |

As clearly shown from Table 1, since the specific strength and the specific elastic modulus of the composite molded article obtained in each Example were respectively optimized, both weight reduction and high mechanical properties were achieved. In addition, since the heat release was also small, it was confirmed that the flame retardancy was excellent.

On the other hand, since the specific strength and the specific elastic modulus of the composite molded article obtained each Comparative Example were respectively out of the optimized ranges, it was confirmed that both weight reduction and high mechanical properties were not achieved.

Although all of the measurement results of the above-described sections 2.4 to 2.6 are not shown in Table 1, all of the composite molded articles obtained in each Example were evaluated as equivalent to "A". On the other hand, the property that the composite molded article obtained in each Comparative was evaluated as equivalent to "B" was included.

"PPS" in Table 1 refers to polyphenylene sulfide, "PEI" refers to polyetherimide, "PEEK" refers to polyether ether ketone, "PP" refers to polypropylene, and "PE" refers to polyethylene.

### 3. Adjustment of Porosity

### (Examples 11 to 14)

First, polyphenylene sulfide (PPS) resin fibers and PAN-based carbon fibers (average length: 13 mm) were added to water and the materials were stirred with a disperser for 30 minutes to obtain slurry. Here, 10000 parts by mass of water was used with respect to a total of 100 parts by mass of the resin and the fibers.

Next, 0.2% by mass of an agglomerating agent (synthetic smectite: SMECTON (manufactured by Kunimine Industries Co., Ltd.)), dissolved in water in advance, with respect to the total mass of the resin and the fibers was added thereto and the mixture was agglomerated in a flock pattern.

Next, the obtained agglomerated substance was separated from water using a metal net having 30 meshes. Thus, an intermediate was obtained. Then, the intermediate was pressed under dewatering and dried using a dryer at 50°C for 5 hours. At this time, the density of the obtained intermediate was 0.55 g/cm³.

Next, the obtained intermediate was put into a cavity of molds and press-molded while being heated to obtain a sheet-like composite molded article having a size of length 80 mm × width 50 mm × thickness 4 mm. At this time, the magnitude of the molding pressure was set to the value shown in Table 2 and composite molded articles of Examples 11 to 14 were respectively obtained.

Next, regarding the obtained composite molded articles, the density was measured in the same manner as in the above-described section 2.1. The measurement results are shown in Table 2.

**[Table 2]**

| | Example 11 | Example 12 | Example 13 | Example 14 |
|---|---|---|---|---|
| Molding pressure (MPa) | 0.6 | 0.9 | 2.7 | 5.4 |
| Density (g/cm³) | 0.60 | 0.62 | 0.80 | 1.00 |

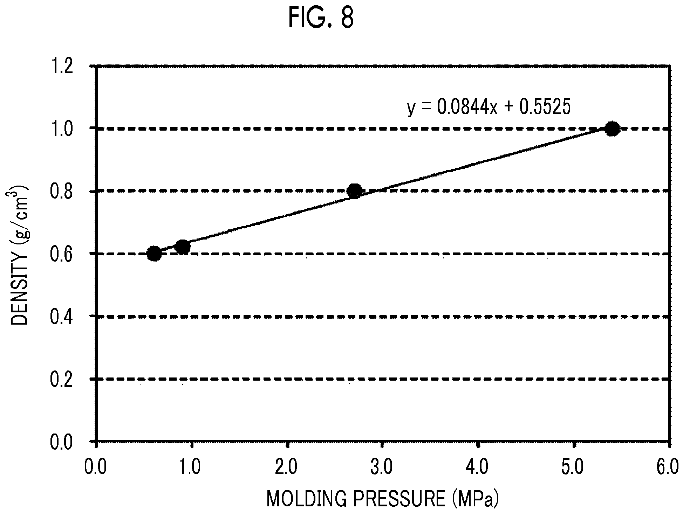

In addition, FIG. 8 is a graph showing a relationship between a set molding pressure and the density of the composite molded article obtained by press molding at the molding pressure. In FI. 8, the density of the composite molded article obtained by each molding pressure is plotted and the data thereof is shown together with a linearly approximated straight line and an expression representing the straight line.

As clearly shown from FIG. 8, a positive correlation is observed between the molding pressure and the density. Moreover, the change rate of density when the molding pressure changes is relatively large. Specifically, in the example shown in FIG. 8, the change rate of density (unit: g/cm³) with respect to a change in molding pressure (unit: MPa) is 0.0844. With such a relatively large change rate, when the molding pressure can be easily changed within an adjustable range, it is possible to secure a large change width of density, that is, a change width of porosity. Thus, a composite molded article having a wide range of porosity (density) can be easily manufactured by using the intermediate according to the embodiment.

In a case where as the resin included in the intermediate, a fibrous resin is used, the change rate can be set to a sufficient magnitude of about 0.03 to 0.3. Thus, the above-described effects can be reliably obtained.

On the other hand, in a case where as the resin included in the intermediate, a granular resin is used, the change rate is smaller than this range. Since there is concern that the adjustable porosity width may become narrow when the composite molded article is manufactured, from this viewpoint, as the resin included in the intermediate, a fibrous resin is particularly preferably used. The change rate may be larger than this range, but in this case, a change in density tends to be sensitive to a change in molding pressure. Thus, there is concern that the manufacturing stability may be slightly lowered.

### (Examples 15 to 17 and Comparative Example 5)

First, polyphenylene sulfide (PPS) resin fibers, polyethylene (PE) resin fibers, and PAN-based carbon fibers (average length: 13 mm) were added to water and the materials were stirred with a disperser for 30 minutes to obtain slurry. Here, 10000 parts by mass of water was used with respect to a total of 100 parts by mass of the resins and the fibers.

Next, 0.2% by mass of an agglomerating agent (synthetic smectite: SMECTON (manufactured by Kunimine Industries Co., Ltd.)), dissolved in water in advance, with respect to the total mass of the resins and the fibers was added thereto and the mixture was agglomerated in a flock pattern.

Next, the obtained agglomerated substance was separated from water using a metal net having 30 meshes. Thus, an intermediate was obtained. Then, the intermediate was pressed under dewatering and dried using a dryer at 50°C for 5 hours. At this time, the density of the obtained intermediate was 0.02 g/cm³.

Next, the obtained intermediate was put into a cavity of molds and press-molded while being heated to obtain a sheet-like composite molded article having a size of length 80 mm × width 50 mm × thickness 4 mm. Regarding Example 17 and Comparative Example 5, a spacer was provided between the intermediate and the mold and then the intermediate was press-molded while being heated to obtain a composite molded article.

Next, regarding the obtained composite molded articles, measurement was performed in the same manner as in the above-described sections 2.1 to 2. 3. The measurement results are shown in Table 3.

**[Table 3]**

| | | | Unit | Example 15 | Example 16 | Example 17 | Comparative Example 5 |
|---|---|---|---|---|---|---|---|
| Slurry | Thermoplastic resin | PPS | % by volume | 55 | 55 | 55 | 55 |
| | | PEI | % by volume | | | | |
| | | PEEK | % by volume | | | | |
| | | PP | % by volume | | | | |
| | Low melting point resin | PE | % by volume | 5 | 5 | 5 | 5 |
| | Fiber | Carbon fiber | % by volume | 40 | 40 | 40 | 40 |
| | | Glass fiber | % by volume | | | | |
| | Total | | % by volume | 100 | 100 | 100 | 100 |
| | Melting point of resin | | °C | 280 | 280 | 280 | 280 |
| Molding condition | Density of intermediate | | g/cm³ | 0.02 | 0.02 | 0.02 | 0.02 |
| | Spacer | | | Not provided | Not provided | Provided | Provided |
| Evaluation results of composite molded article | Density (specific gravity) | | g/cm³ | 1.36 | 1.23 | 0.30 | 0.21 |
| | Porosity | | % | 9.0 | 17.0 | 80.0 | 86.0 |
| | Mechanical properties | Bending strength | MPa | 173 | 154 | 15 | 5.5 |
| | | Specific strength | MPa·(g/cm³)⁻¹ | 127 | 125 | 49 | 27 |
| | | Bending elastic modulus | GPa | 15.2 | 15.0 | 2.1 | 1.9 |
| | | Specific elastic modulus | GPa·(g/cm³)⁻¹ | 11.2 | 12.2 | 7.1 | 9.2 |
| | | Impact resistance | - | A | A | A | B |
| | Heat release | Peak heat release rate | kW/m² | 27.18 | 35.04 | 23.24 | 24.31 |
| | | 2-Minute total heat release | kW·min/m² | 14.77 | 27.57 | 27.42 | 35.81 |

As clearly shown in Table 3, the porosity of the composite molded article could be adjusted in a wide range (9.0% to 86%). Since the specific strength and the specific elastic modulus of the composite molded article obtained in each Example in which the porosity is in a range of 9.0% to 80% were optimized, both weight reduction and high mechanical properties were achieved. In addition, since the heat release was also small, it was confirmed that the flame retardancy was excellent. On the other hand, since the specific strength of the composite molded article obtained in Comparative Example 5 was out of the optimized range, it was confirmed that both weight reduction and high mechanical properties were not achieved.

Measurement was performed in the same manner as in the above-described sections 2.4 to 2.6. Although all of the evaluation results are not shown in Table 3, all of the composite molded articles obtained in each Example were evaluated as equivalent to "A".

### Industrial Applicability

The composite molded article of the present invention includes a resin, fibers provided to be dispersed in the resin, and holes formed between the resin and the fibers, and the specific strength is 30 to 400 MPa·(g/cm³)⁻¹. Thus, it is possible to provide a composite molded article that achieves both weight reduction and high mechanical properties. Accordingly, the present invention has industrial applicability.

### Reference Signs List

- 1: composite molded article
- 2: resin
- 3: fiber
- 4: hole
- 5: dispersion medium
- 6: dispersion liquid
- 8: hole
- 10: intermediate
- 70: container
- 71: filter
- 72: press mold
- 73: press mold
- 74: mold
- 75: mold
- 100: interior material for transportation equipment
- 110: opening

## Claims

1. A composite molded article comprising:
a resin;
fibers provided to be dispersed in the resin; and
holes formed between the resin and the fibers, wherein a specific strength is 30 to 400 Mpa·(g/cm³)⁻¹.

2. The composite molded article according to claim 1, wherein a porosity is 5% to 90%.

3. The composite molded article according to claim 1 or 2,
wherein the fibers have an average length of 1 mm or more.

4. The composite molded article according to any one of claims 1 to 3,
wherein the fibers are inorganic fibers.

5. The composite molded article according to any one of claims 1 to 4,
wherein the resin includes a thermoplastic resin.

6. The composite molded article according to any one of claims 1 to 5,
wherein a 2-minute total heat release is 50 [kW·min/m²] or less, and a peak heat release rate is 50 [kW/m²] or less.

7. The composite molded article according to any one of claims 1 to 6,
wherein the resin has a melting point of 200°C to 400°C.

8. An intermediate for a composite molded article, comprising:
a resin;
fibers having a melting point higher than that of the resin; and
holes,
wherein a porosity is 25% to 99%, and
the intermediate has moldability when heated.

9. The intermediate for a composite molded article claim 8,
wherein the resin has a melting point of 200°C to 400°C.

10. The intermediate for a composite molded article according to claim 8 or 9,
wherein the resin is fibrous.

11. The intermediate for a composite molded article according to any one of claims 8 to 10,
wherein the fibers are inorganic fibers.

12. A method of manufacturing a composite molded article, comprising:
a step of performing papermaking using a dispersion liquid including a resin having a melting point of 200°C to 400°C, and fibers having a melting point higher than that of the resin to obtain an intermediate; and
a step of press-molding the intermediate while heating, and melting at least a part of the resin to obtain a composite molded article.

13. The method of manufacturing a composite molded article according to claim 12,
wherein the resin is fibrous.

14. An interior material for transportation equipment comprising:
the composite molded article according to any one of claims 1 to 7.
